# EUROPÄISCHE PATENTSCHRIFT

(11) **EP 2 174 402 B1**
(45) Veröffentlichungstag und Bekanntmachung des Hinweises auf die Patenterteilung: **10.05.2017**
(21) Anmeldenummer: 08786383.3
(22) Anmeldetag: 24.07.2008
(51) Int. Cl.: H02K 21/04, H02K 1/22

(54) **ELEKTRISCHE MASCHINE**
ELECTRICAL MACHINE
MOTEUR ELECTRIQUE

(30) Priorität: 24.07.2007 DE 102007034326
(43) Veröffentlichungstag der Anmeldung: 14.04.2010
(73) Patentinhaber: Robert Bosch GmbH, 70442 Stuttgart (DE)
(72) Erfinder: AUSIN ALONSO, Cristina, 71636 Ludwigsburg (DE); WINTER, Falko, 71706 Markgroeningen (DE)
(86) Internationale Anmeldenummer: PCT/EP2008/059691
(87) Internationale Veröffentlichungsnummer: WO 2009/013330

(56) Entgegenhaltungen:
- EP-A- 1 065 776
- DE-A1- 10 318 636
- DE-A1- 19 951 115
- DE-A1-102006 041 981

## Beschreibung

Die Erfindung betrifft eine elektrische Maschine, insbesondere eine Klauenpolmaschine für ein Kraftfahrzeug, mit einem mehrere elektrisch erregbare Pole aufweisenden Stator oder Rotor, wobei zwischen mindestens zwei benachbarten Polen der in Umfangsrichtung alternierend magnetisch gepolten Pole ein Permanentmagnet zur Verringerung eines magnetischen Streuflusses angeordnet ist, der mittels eines Halteelements zwischen den benachbarten Polen gehalten ist, wobei das Halteelement in einander gegenüberliegend angeordneten Haltenuten der Pole einliegt.

### Stand der Technik

Eine derartige elektrische Maschine ist als Klauenpolgenerator für ein Kraftfahrzeug bekannt. Die DE 199 51 115 A1 offenbart einen Klauenpolgenerator für ein Kraftfahrzeug mit einem Klauenpolrotor, der zwei Polradhälften aufweist. Die Pole der einen Polradhälfte greifen dabei jeweils in eine Lücke zwischen zwei Polen der jeweils anderen Polradhälfte ein. In den Zwischenräumen zwischen je einem Pol der einen und einem Pol der anderen Polradhälfte werden Permanentmagnete zur Verringerung des magnetischen Streuflusses und zur Leistungssteigerung angeordnet. Die Permanentmagnete sind mittels zugeordneter Halteelemente zwischen den benachbarten Polen der beiden Polradhälften gehalten. Die Halteelemente werden zu ihrer Befestigung am Polrad jeweils in einander gegenüberliegenden Haltenuten zweier Pole eingeschoben. Die Halteelemente weisen ihrerseits Haltestrukturen auf, mit denen sie die Permanentmagnete zwischen den Polen halten. Durch die Anordnung der Permanentmagnete zwischen den Polen wird ein magnetischer Streufluss, der nicht zur Leistungserzeugung beiträgt, unterbunden und die abgegebene Leistung der elektrischen Maschine gesteigert.

Die Permanentmagnete und die mit ihnen verbundenen Halteelemente erfahren durch Vibrationsbeanspruchung der elektrischen Maschine und durch Beschleunigungen des Rotors Kräfte in die Richtung, in der sie zur Montage eingeschoben wurden. Um eine sichere Halterung der Permanentmagnete zu gewährleisten, müssen die Halteelemente in dieser Richtung fixiert werden.

### Offenbarung der Erfindung

Erfindungsgemäß ist vorgesehen, dass das Halteelement und/oder mindestens eine der Haltenuten mindestens einen Klemmvorsprung aufweist. Mittels dieses Klemmvorsprungs wird das Halteelement in der Haltenut verklemmt. Unter einem Klemmvorsprung ist im Zusammenhang mit dieser Anmeldung ein gegenüber der sonstigen Kontur des Halteelements hervorstehender Vorsprung des Halteelements zu verstehen, mit dem das Halteelement in mindestens einer Haltenut eines Pols verklemmt werden kann. Zum Verklemmen des Halteelements in den einander gegenüberliegend angeordneten Haltenuten der Pole ist das Halteelement und/oder die Haltenut elastisch ausgebildet oder weist einen elastischen Teil auf. Ist die elektrische Maschine als Klauenpolmaschine ausgebildet, so weist der Rotor zwei mit ihren jeweiligen Polen ineinandergreifende Polradhälften auf, wobei sich jeder der Pole der einen Polradhälfte jeweils in den Lücken zwischen zwei Polen der jeweils anderen Polradhälfte befindet. Durch diese Anordnung ergibt sich ein Rotor mit in Umfangsrichtung alternierend magnetisch gepolten Polen, zwischen denen die Permanentmagnete angeordnet sind. Zur Befestigung des Permanentmagneten am Halteelement sind diese Elemente zum Beispiel miteinander verklebt oder geklemmt. Alternativ weist das Halteelement an jedem axialen Ende seines Grundbereichs eine Haltestruktur zum axialen Halten des Permanentmagneten auf. Insbesondere ist vorgesehen, dass eine aus Halteelement und Permanentmagnet gebildete Baugruppe durch ein vorwiegend axial gerichtetes Einschieben entlang der einander gegenüberliegenden Haltenuten der Pole montiert wird. Die Permanentmagnete sind bei der Klauenpolmaschine lediglich im Wesentlichen axial beziehungsweise grob axial ausgerichtet und weisen insbesondere gegenüber einer exakt axialen Ausrichtung eine schräge Ausrichtung auf.

Die in dieser Anmeldung verwendeten Angaben radial, umfänglich und axial beziehen sich -wenn nicht anders angegeben- jeweils auf eine Drehachse des Rotors der elektrischen Maschine, geben dabei jedoch nur eine jeweilige grobe Richtung an.

Weiterhin ist mit Vorteil vorgesehen, dass der Klemmvorsprung als radialer und/oder im Wesentlichen umfänglicher Klemmvorsprung ausgebildet ist. Weist das Halteelement den Klemmvorsprung auf, so tritt dieser im montierten Zustand des Halteelements gegen mindestens eine Nutwand und/oder einen Nutgrund mindestens einer der Haltenuten. Weist eine der Haltenuten den Klemmvorsprung auf, so tritt dieser gegen die Ober- oder Unterseite, beziehungsweise gegen die Längsseite des Halteelements. Zur Montage der Permanentmagnete bei einer Klauenpolmaschine werden die Halteelemente im Wesentlichen axial entlang der gegenüberliegend angeordneten Haltenuten der Pole eingeschoben. Um das Halteelement und den entsprechenden Permanentmagneten in im Wesentlichen axialer Richtung zu sichern, wird das Halteelement in radialer und/oder im Wesentlichen umfänglicher Richtung in mindestens einer der Haltenuten radial verklemmt und/oder im Wesentlichen umfänglich (tangential) zwischen den gegenüberliegenden Haltenuten verklemmt und somit im Wesentlichen axial lösbar fixiert.

In einer vorteilhaften Ausgestaltung der Erfindung ist vorgesehen, dass der Klemmvorsprung als elastischer Klemmvorsprung ausgebildet ist. Zum Verklemmen des Halteelements in den Haltenuten oder einer der Haltenuten wird der elastische Klemmvorsprung elastisch verformt.

Nach einer Weiterbildung der Erfindung ist vorgesehen, dass der elastische Klemmvorsprung von einer Federzunge gebildet wird. Ist das Halteelement zum Beispiel als Halteblech ausgebildet, so ist im Seitenbereich ein Teil des Haltebleches ausgeschnitten oder ausgestanzt und gegenüber dem Rest des Halteblechs in radialer oder umfänglicher Richtung gebogen und bildet eine elastische Federzunge zum Verklemmen in mindestens einer der Haltenuten.

Bei einer vorteilhaften Ausgestaltung der Erfindung ist vorgesehen, dass der Klemmvorsprung als starrer Klemmvorsprung ausgebildet ist. Ist der Klemmvorsprung ein radialer Klemmvorsprung des Halteelements, so ist dieser insbesondere als ein das Halteelement auf seiner Ober- und/oder Unterseite übergreifender Steg ausgebildet. Ist der starre Klemmvorsprung als im Wesentlichen umfänglicher Klemmvorsprung ausgebildet, so ist dieser bevorzugt als seitlich angeordnete Nase ausgebildet, die bei einem in die Haltenuten eingeschobenen Halteelement gegen den Nutgrund einer der Haltenuten tritt. Die Klemmkraft zum Verklemmen bei einem starren Klemmvorsprung wird von mindestens einem elastischen Teil des Halteelements und/oder mindestens einer der Haltenuten aufgebracht. Das Halteelement und/oder die Haltenut wird dazu in Klemmrichtung elastisch verformt und somit vorgespannt.

In einer vorteilhaften Ausgestaltung der Erfindung ist vorgesehen, dass mindestens eine der Haltenuten und/oder das Halteelement mindestens eine Ausnehmung aufweist, in die der Klemmvorsprung rastend eingreifen kann. Ist der Klemmvorsprung am Halteelement ausgebildet, so weist eine der Haltenuten die Ausnehmung auf, ist der Klemmvorsprung an einer der Haltenuten ausgebildet, so weist das Halteelement die Ausnehmung auf. Durch einen Eingriff/Hintergriff des Klemmvorsprung-Ausnehmungs-Systems wird das Halteelement gleichzeitig befestigt und positioniert.

In einer vorteilhaften Ausgestaltung der Erfindung ist vorgesehen, dass Halteelement und Permanentmagnet zwischen den benachbarten Polen durch eine Klemmung fixiert ist. Nachdem Halteelement und Permanentmagnet zwischen den Polen eingeschoben ist, wird Haltelement und Permanentmagnet - zum Beispiel durch ein nachträglich aufgebrachtes Imprägnierharz - zusätzlich verklebt.

Mit Vorteil ist vorgesehen, dass das Halteelement als Halteblech ausgebildet ist. Ein Halteblech ist einfach und preisgünstig herstellbar.

Insbesondere ist vorgesehen, dass der Klemmvorsprung ein geprägter Klemmvorsprung ist. Der Klemmvorsprung lässt sich bei einem als Halteblech ausgebildeten Halteelement besonders einfach durch Prägen herstellen.

Schließlich ist mit Vorteil vorgesehen, dass die Vorsprunghöhe des Klemmvorsprungs maximal dem vierfachen der Blechdicke des Halteblechs entspricht.

### Kurze Beschreibung der Zeichnungen

Im Folgenden soll die Erfindung anhand von Zeichnungen näher erläutert werden. Dazu zeigen:
- Figur 1: eine perspektivische Darstellung einer vormontierten Baugruppe mit Halteelement und Permanentmagnet vor der Montage zwischen zwei Polen eines nicht vollständig dargestellten Rotors,
- Figur 2: ein Halteelement mit einem elastischen, radial ausgebildeten Klemmvorsprung,
- Figur 3: ein Halteelement mit einem elastisch ausgebildeten, im Wesentlichen umfänglichen Klemmvorsprung,
- Figur 4: ein Halteelement mit einem starren, radialen Klemmvorsprung,
- Figur 5: ein Halteelement mit einem starren, umfänglichen Klemmvorsprung,
- Figur 6: eine Haltenut eines Pols, die umfängliche Ausnehmungen aufweist,
- Figur 7: eine Haltenut eines Pols, die radiale Ausnehmungen aufweist,
- Figur 8: ein Halteelement mit einem radialen Klemmvorsprung und eine Haltenut eines Pols mit einer dem Klemmvorsprung korrespondierenden radialen Ausnehmung.

### Ausführungsform(en) der Erfindung

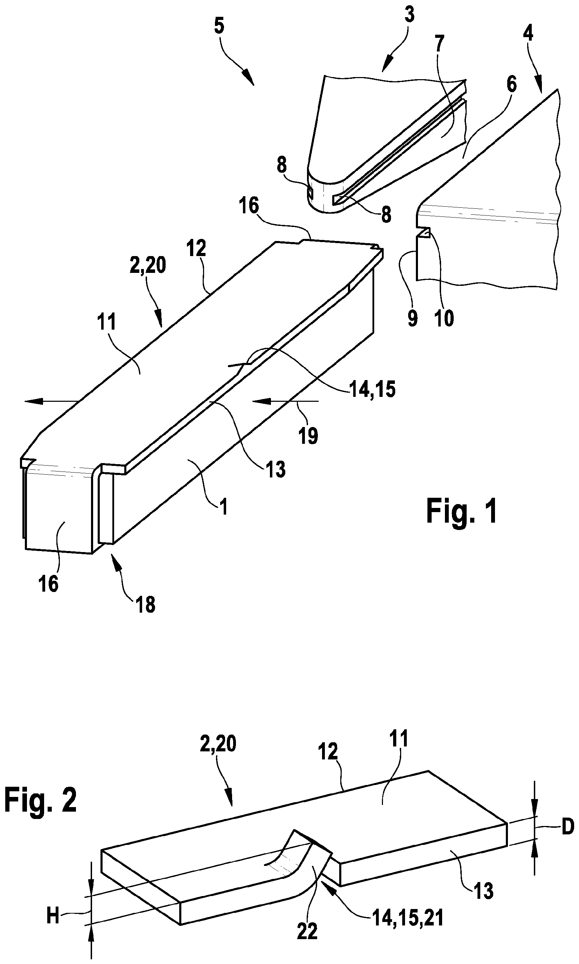

Die Figuren 1 bis 8 zeigen den Aufbau und die Befestigung von Permanentmagneten 1 mittels Halteelementen 2 zwischen jeweils benachbarten Polen 3, 4 eines in Figur 1 nur teilweise gezeigten Rotors 5 einer als Klauenpolgenerator ausgebildeten elektrischen Maschine. Die in dieser Anmeldung verwendeten Angaben radial, umfänglich und axial beziehen sich - wenn nicht anders angegeben-jeweils im Wesentlichen auf eine Drehachse des Rotors 5. Die Permanentmagnete sind leicht schräg zur Drehachse des Rotors montiert. Die Angaben axial und in Umfangsrichtung lassen auch dazu geneigte Richtungen zu. Der Rotor 5 besteht aus zwei je eine gleiche Anzahl von Polen 3, 4 aufweisenden Polradhälften. Die Pole 3, 4 jeder der Polradhälften sind der jeweils anderen Polradhälfte zugewandt und dabei so angeordnet, dass jeder Pol 3 der einen Polradhälfte in eine Lücke zwischen zwei Polen 4 der anderen Polradhälfte eingreift. In die dabei entstehenden Zwischenräume 6 zwischen je einem Pol 3 der einen Polradhälfte und einem Pol 4 der anderen Polradhälfte werden die Permanentmagnete 1 mittels der Halteelemente 2 gehalten. Der eine Pol 3 weist auf seiner, dem anderen Pol 4 zugewandten Seite 7 eine Haltenut 8 und der andere Pol 4 auf seiner dem einen Pol 3 zugewandten Seite 9 eine der Haltenut 8 gegenüberliegende Haltenut 10 auf. Zur Befestigung des Permanentmagneten 1 im Zwischenraum 6 zwischen dem Pol 3 und dem Pol 4 wird der Permanentmagnet 1 - zumindest in im Wesentlichen axialer Richtung - mit dem Halteelement 2 verbunden und anschließend die vom Permanentmagneten 1 und dem Halteelement 2 gebildete Baueinheit in den Zwischenraum 6 zwischen den Polen 3 und 4 eingeschoben. Eine derartige Anordnung von Permanentmagneten 1 zwischen den Polen 3, 4 des Rotors 5 eines Klauenpolgenerators ist aus der DE 199 51 115 A1 bekannt.

Zur Befestigung des Permanentmagneten 1 greift ein Grundbereich 11 des Halteelements 2 mit den Kanten seiner Längsseiten 12, 13 in die einander gegenüberliegenden Haltenuten 8, 10 ein. Zum Halten des Halteelements 2 in im Wesentlichen axialer Richtung weist dieses auf der einen Längsseite 13 einen Klemmvorsprung 14 auf. Der Klemmvorsprung 14 ist in der Figur 1 als radialer Klemmvorsprung 15 ausgebildet, der das zwischen den Polen 3, 4 angeordnete Halteelement 2 durch radiales Verklemmen in der Haltenut 10 axial lösbar fixiert. Um seinerseits den Permanentmagneten 1 zu fixieren weist das Halteelement 2 an jedem axialen Ende seines Grundbereichs 11 eine Lasche 16 auf. Diese Lasche 16 ist dabei vom Grundbereich 11 abgewinkelt ausgebildet. An jedem, dem Grundbereich 11 abgewandten Ende der Laschen 16 befindet sich ein ebenfalls abgewinkelter Endbereich 17. Die Endbereiche 17 der Laschen 16 weisen dabei Flächen auf, die dem Grundbereich 11 zugewandt sind. Die Laschen 16 bilden somit Haltestrukturen 18 die den Permanentmagneten 1 im Wesentlichen axial am Halteelement 2 halten. Das in die Haltenuten 8, 10 eingeschobene Halteelement 2 fixiert somit den Permanentmagneten 1 zwischen den Polen 3, 4 somit in radialer und umfänglicher Richtung.

Zur Montage wird der vorzugsweise quaderförmige Permanentmagnet 1 von der Seite (Pfeil 19) in die Haltestruktur 18 des Halteelements 2 eingebracht. Anschließend wird die vom Permanentmagneten 1 und dem Halteelement 2 gebildete Baueinheit in den Zwischenraum 6 zwischen den Polen 3 und 4 axial eingeschoben. Das Halteelement 2 ist insbesondere aus einem magnetisch nicht erregbaren Material. Es ist vorzugsweise als Halteblech 20 ausgebildet.

Die Figuren 2 bis 8 zeigen verschiedene Ausführungsformen von Klemmvorsprüngen 15 in den Bereichen der Längsseiten 12, 13 des Grundbereichs 11 eines Halteelements 2, die bei montiertem Halteelement 2 in die Haltenuten 8, 10 eingreifen. Das Halteelement 2 ist in den Figuren 2 bis 8 zur vereinfachten Darstellung auf seinen Grundbereich 11 reduziert dargestellt.

Die Figur 2 zeigt wie die Figur 1 einen radialen Klemmvorsprung 15, der jedoch als elastischer Klemmvorsprung 21 an der Längsseite 13 ausgebildet ist. Der elastische Klemmvorsprung 21 wird von einer Federzunge 22 gebildet, die aus dem Blechmaterial des Grundbereichs 11 des Halteblechs 20 ausgeschnitten oder ausgestanzt ist. Die Federzunge 22 bleibt dabei einstückig mit dem Grundbereich 11 verbunden. Das in die Haltenuten 8, 10 eingeschobene Halteelement 2 wird mittels des radialen Klemmvorsprungs 15 zwischen den Nutwänden einer der Haltenuten 8, 10 verklemmt. Da der Klemmvorsprung 14 als elastischer Klemmvorsprung 21 ausgebildet ist, wird die Eigenelastizität der Federzunge 22 zum Verspannen des Halteelements 2 in der Haltenut 8, 10 genutzt. Der Klemmvorsprung 14 weist eine Vorsprunghöhe H auf, die maximal dem vierfachen einer Blechdicke D des Halteblechs 20 entspricht.

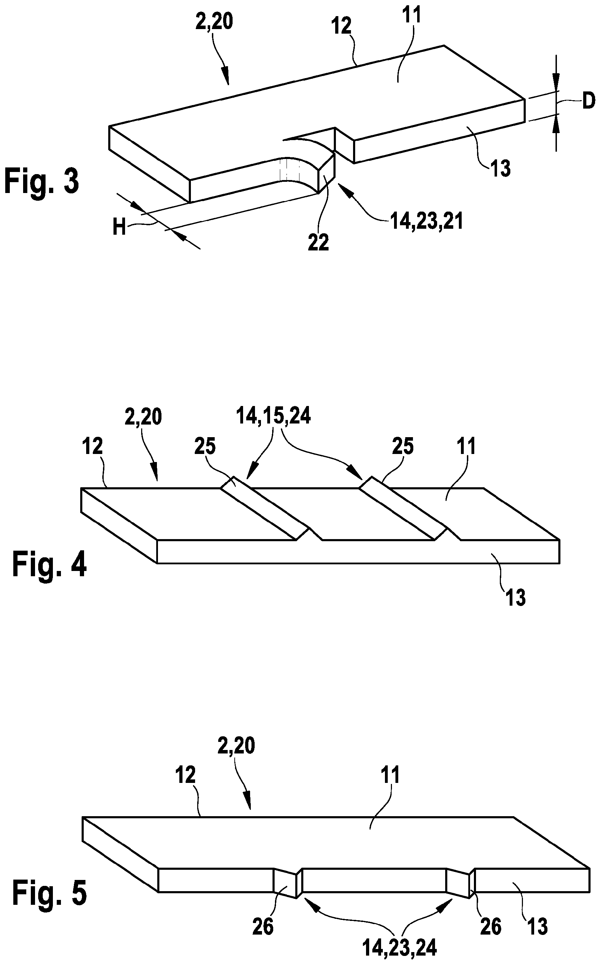

Die Figur 3 zeigt ein Halteelement 2, das im Wesentlichen dem Halteelement 2 der Figur 2 entspricht, sodass hier nur auf die Unterschiede eingegangen wird. Das Halteelement 2 der Figur 3 weist ebenfalls einen von einer Federzunge 22 gebildeten elastischen Klemmvorsprung 21 im Bereich einer der Längsseiten 12, 13 auf. Im Gegensatz zum Klemmvorsprung 14 der Figuren 1 und 2 ist der Klemmvorsprung 14 der Figur 3 als im Wesentlichen umfänglicher Klemmvorsprung 23 ausgebildet. Die Federzunge 22 der Figur 3 ist ebenfalls ein aus dem Grundbereich 11 des Halteblechs 20 ausgestanzter, aber umfänglich nach außen gebogener einstückiger Teil des Halteelements 2. Durch das Biegen entsteht der elastische Klemmvorsprung 21, der umfänglich gegenüber der Kante an der Längsseite 13 hervorragt.

Die Figuren 4 und 5 zeigen jeweils ein Halteelement 2 mit zwei als starre Klemmvorsprünge 24 ausgebildeten Klemmvorsprüngen 14. Die starren Klemmvorsprünge 24 der Figuren 4 sind dabei als radiale Klemmvorsprünge 15 und die starren Klemmvorsprünge 24 der Figur 5 als umfängliche Klemmvorsprünge 23 ausgebildet. Die starren Klemmvorsprünge 24 des Halteelements 2 der Figur 4 sind als auf einer Oberseite des Halteelements 2 angeordnete, von einer Längsseite 13 zur anderen Längsseite 12 verlaufende Stege 25 ausgebildet. Die starren Klemmvorsprünge 24 der Figur 5 sind als über die Kontur der Kante der Längsseite 13 hinausragende Nasen 26 ausgebildet.

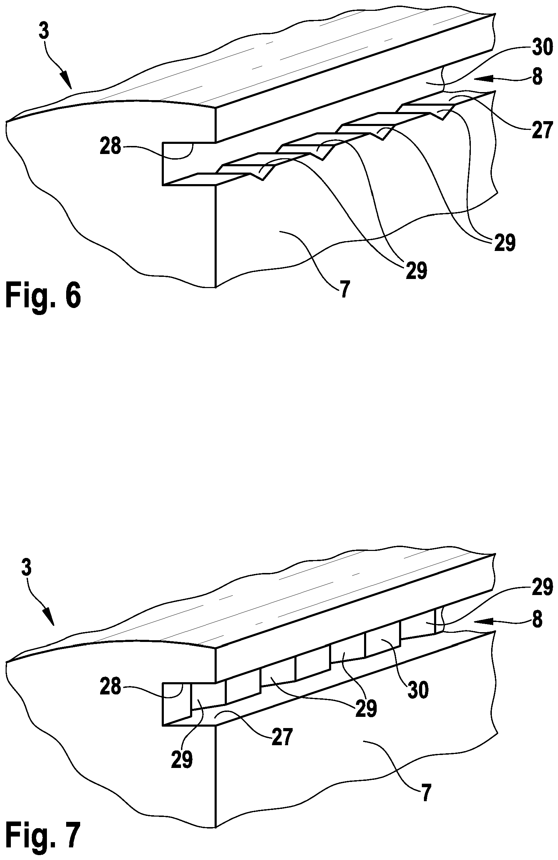

Die Figur 6 zeigt einen Pol 3 mit Haltenut 8 auf seiner dem nicht dargestellten Pol 4 zugewandten Seite 7. Die Haltenut 8 weist an einer ihrer Nutwände 27, 28 mehrere Ausnehmungen 29 auf, in die ein radialer Klemmvorsprung 15 zum Beispiel eines der in den Figuren 1, 2 und 4 dargestellten Halteelemente 2 rastend eingreifen kann.

Die Figur 7 zeigt ebenfalls einen Pol 3 mit Haltenut 8 auf seiner dem nicht dargestellten Pol 4 zugewandten Seite 7. Die Haltenut 8 weist an ihrem Nutgrund 30 mehrere Ausnehmungen 29 auf, in die zum Beispiel die umfänglichen Klemmvorsprünge 23 der in den Figuren 3 oder 5 dargestellten Halteelemente 2 zur axialen Fixierung rastend eingreifen können.

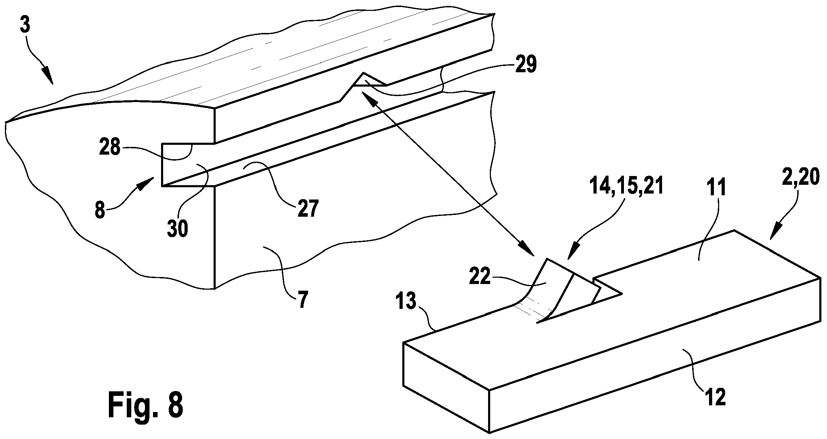

Die Figur 8 zeigt die sich ergebende Rastverbindung zwischen einer Haltenut 8, 10 und einem Halteelement 2 mit radialem Klemmvorsprung 15, der als elastischer Klemmvorsprung 21 ausgebildet ist.

Alternativ zu der in den Figuren 1 bis 8 gezeigten Ausbildung des Klemmvorsprungs 14 am Halteelement 2 kann der Klemmvorsprung 14 zum Verklemmen des Halteelements 2 auch an mindestens einer der zugeordneten Haltenuten 8, 10 ausgebildet sein. Die korrespondierende Ausnehmung 29 ist in diesem Fall am Halteelement 2 ausgebildet.

## Patentansprüche

1. Elektrische Maschine, insbesondere Klauenpolmaschine für ein Kraftfahrzeug, mit einem mehrere elektrisch erregbare Pole (3,4) aufweisenden Stator oder Rotor (5), wobei zwischen mindestens zwei benachbarten Polen (3,4) der in Umfangsrichtung alternierend magnetisch gepolten Pole (3,4) ein Permanentmagnet (1) zur Verringerung eines magnetischen Streuflusses angeordnet ist, der mittels eines Halteelements (2) zwischen den benachbarten Polen (3,4) gehalten ist, wobei das Halteelement (2) in einander gegenüberliegend angeordneten Haltenuten (8,10) der Pole (3,4) einliegt, **dadurch gekennzeichnet, dass** das Halteelement (2) mindestens einen Klemmvorsprung (14) aufweist, der im montierten Zustand des Halteelements (2) gegen mindestens eine Nutwand und/oder einen Nutgrund mindestens einer der Haltenuten (8,10) tritt, und/oder dass mindestens eine der Haltenuten (8,10) mindestens einen Klemmvorsprung (14) aufweist, der gegen die Ober- oder Unterseite beziehungsweise gegen die Längsseite (12,13) des Halteelements (2) tritt.

2. Elektrische Maschine nach Anspruch 1, **dadurch gekennzeichnet, dass** der Klemmvorsprung (14) als radialer Klemmvorsprung (15) und/oder im Wesentlichen umfänglicher Klemmvorsprung (23) ausgebildet ist.

3. Elektrische Maschine nach einem der vorhergehenden Ansprüche,
**dadurch gekennzeichnet, dass** der Klemmvorsprung (14) als elastischer Klemmvorsprung (21) ausgebildet ist.

4. Elektrische Maschine nach einem der vorhergehenden Ansprüche,
**dadurch gekennzeichnet, dass** der elastische Klemmvorsprung (21) von einer Federzunge (22) gebildet wird.

5. Elektrische Maschine nach einem der vorhergehenden Ansprüche,
**dadurch gekennzeichnet, dass** der Klemmvorsprung (14) als starrer Klemmvorsprung (24) ausgebildet ist.

6. Elektrische Maschine nach einem der vorhergehenden Ansprüche,
**dadurch gekennzeichnet, dass** mindestens eine der Haltenuten (8,10) und/oder das Halteelement (2) mindestens eine Ausnehmung (29) aufweist, in die der Klemmvorsprung (14) rastend eingreifen kann.

7. Elektrische Maschine nach einem der vorhergehenden Ansprüche,
**dadurch gekennzeichnet, dass** Halteelement (2) und Permanentmagnet (1) zwischen den benachbarten Polen (3,4) durch eine Klemmung fixiert ist.

8. Elektrische Maschine nach einem der vorhergehenden Ansprüche,
**dadurch gekennzeichnet, dass** das Halteelement (2) Haltestrukturen (19) aufweist, mit denen es den Permanentmagnet (1) axial umgreift.

9. Elektrische Maschine nach einem der vorhergehenden Ansprüche,
**dadurch gekennzeichnet, dass** das Halteelement (2) als Halteblech (20) ausgebildet ist.

10. Elektrische Maschine nach einem der vorhergehenden Ansprüche,
**dadurch gekennzeichnet, dass** der Klemmvorsprung (14) ein geprägter Klemmvorsprung ist.

11. Elektrische Maschine nach einem der vorhergehenden Ansprüche,
**dadurch gekennzeichnet, dass** die Vorsprunghöhe (H) des Klemmvorsprungs (14) maximal dem vierfachen der Blechdicke (D) des Halteblechs (20) entspricht.

## Claims

1. Electrical machine, in particular claw-pole machine for a motor vehicle, comprising a stator or rotor (5) which has a plurality of electrically excitable poles (3, 4), wherein a permanent magnet (1) for reducing a magnetic stray flux is arranged between at least two adjacent poles (3, 4) of the poles (3, 4) which have an alternating magnetic polarity in the circumferential direction, the said permanent magnet being held between the adjacent poles (3, 4) by means of a holding element (2), wherein the holding element (2) is situated in holding grooves (8, 10) of the poles (3, 4) which are arranged opposite one another, **characterized in that** the holding element (2) has at least one clamping projection (14) which, in the mounted state of the holding element (2), meets at least one slot wall and/or a slot base of at least one of the holding grooves (8, 10) and/or **in that** at least one of the holding grooves (8, 10) has at least one clamping projection (14) which meets the top or bottom side or the longitudinal side (12, 13) of the holding element (2).

2. Electrical machine according to Claim 1, **characterized in that** the clamping projection (14) is in the form of a radial clamping projection (15) and/or a substantially circumferential clamping projection (23).

3. Electrical machine according to either of the preceding claims, **characterized in that** the clamping projection (14) is in the form of an elastic clamping projection (21).

4. Electrical machine according to one of the preceding claims, **characterized in that** the elastic clamping projection (21) is formed by a spring tongue (22).

5. Electrical machine according to one of the preceding claims, **characterized in that** the clamping projection (14) is in the form of a rigid clamping projection (24).

6. Electrical machine according to one of the preceding claims, **characterized in that** at least one of the holding grooves (8, 10) and/or the holding element (2) has at least one recess (29) into which the clamping projection (14) can engage in a latching manner.

7. Electrical machine according to one of the preceding claims, **characterized in that** the holding element (2) and the permanent magnet (1) are fixed between the adjacent poles (3, 4) by a clamping arrangement.

8. Electrical machine according to one of the preceding claims, **characterized in that** the holding element (2) has holding structures (19) by way of which it engages axially around the permanent magnet (1).

9. Electrical machine according to one of the preceding claims, **characterized in that** the holding element (2) is in the form of a metal holding plate (20).

10. Electrical machine according to one of the preceding claims, **characterized in that** the clamping projection (14) is a stamped clamping projection.

11. Electrical machine according to one of the preceding claims, **characterized in that** the projection height (H) of the clamping projection (14) corresponds at most to four times the thickness (D) of the metal holding plate (20).

## Revendications

1. Machine électrique, notamment machine à pôles à griffes destinée à un véhicule automobile, comportant un stator ou un rotor (5) comportant plusieurs pôles excitables électriquement (3, 4), dans laquelle un aimant permanent (1) est disposé entre au moins deux pôles voisins (3, 4) des pôles (3, 4) polarisés magnétiquement de manière alternée dans la direction circonférentielle pour réduire un flux magnétique de fuite, lequel aimant permanent est maintenu au moyen d'un élément de support (2) entre les pôles voisins (3,4), dans lequel l'élément de support (2) est introduit dans des rainures de maintien (8, 10) des pôles (3, 4) disposées de manière opposée l'une à l'autre, **caractérisée en ce que** l'élément de support (2) comporte au moins une protubérance de serrage (14) qui, à l'état monté de l'élément de support (2), appuie contre au moins une paroi de la rainure et/ou un fond de rainure d'au moins l'une des rainures de maintien (8, 10), et/ou **en ce qu'**au moins l'une des rainures de maintien (8, 10) comporte au moins une protubérance de serrage (14) qui appuie contre la face supérieure ou inférieure ou contre le côté longitudinal (12, 13) de l'élément de support (2).

2. Machine électrique selon la revendication 1, **caractérisée en ce que** la protubérance de serrage (14) est réalisée sous la forme d'une protubérance de serrage radiale (15) et/ou d'une protubérance de serrage sensiblement circonférentielle (23).

3. Machine électrique selon l'une quelconque des revendications précédentes, **caractérisée en ce que** la protubérance de serrage (14) est réalisée sous la forme d'une protubérance de serrage élastique (21).

4. Machine électrique selon l'une quelconque des revendications précédentes, **caractérisée en ce que** la protubérance de serrage élastique (21) est formée d'une languette élastique (22).

5. Machine électrique selon l'une quelconque des revendications précédentes, **caractérisée en ce que** la protubérance de serrage (14) est réalisée sous la forme d'une protubérance de serrage rigide (24).

6. Machine électrique selon l'une quelconque des revendications précédentes, **caractérisée en ce qu'**au moins l'une des rainures de maintien (8, 10) et/ou l'élément de support (2) comporte au moins un évidement (29) dans lequel la protubérance de serrage (14) peut s'engager par encliquetage peut s'engager.

7. Machine électrique selon l'une quelconque des revendications précédentes, **caractérisée en ce que** l'élément de support (2) et l'aimant permanent (1) sont fixés par serrage entre les pôles voisins (3,4).

8. Machine électrique selon l'une quelconque des revendications précédentes, **caractérisée en ce que** l'élément de support (2) comporte des structures de support (19) avec lesquelles il enserre axialement l'aimant permanent (1).

9. Machine électrique selon l'une quelconque des revendications précédentes, **caractérisée en ce que** l'élément de support (2) est réalisé sous la forme d'une tôle de support (20).

10. Machine électrique selon l'une quelconque des revendications précédentes, **caractérisée en ce que** la protubérance de serrage (14) est une protubérance de serrage gravée.

11. Machine électrique selon l'une quelconque des revendications précédentes, **caractérisée en ce que** la hauteur de protubérance (H) de la protubérance de serrage (14) correspond au maximum au quadruple de l'épaisseur de tôle (D) de la tôle de support (20).
